# EUROPÄISCHE PATENTANMELDUNG

(11) **EP 0 885 769 A2**
(43) Veröffentlichungstag der Anmeldung: **23.12.1998**
(21) Anmeldenummer: 98111283.2
(22) Anmeldetag: 18.06.1998
(51) Int. Cl.: B60N 3/00

(54) **Ablage zur Befestigung im Innenraum eines Kraftfahrzeuges, insbesondere für Büro- und Organisationsmittel**

(30) Priorität: 21.06.1997 DE 19726385
(71) Anmelder: Knorr, Rüdiger, 41564 Kaarst (DE)
(72) Erfinder: Knorr, Rüdiger, 41564 Kaarst (DE)
(74) Vertreter: Stenger, Watzke & Ring Patentanwälte

(57) **Zusammenfassung**

Vorgeschlagen wird eine Ablage zur Befestigung im Innenraum eines Kraftfahrzeuges, insbesondere für Büro- und Organisationsmittel, wie beispielsweise sog. "Laptops" und "Notebooks". Um Büro- und Organisationsarbeiten vom Fahrersitz eines Kraftfahrzeuges aus in bequemer, entspannter Haltung erledigen zu können, ohne daß irgendwelche konstruktive Vorbereitungen oder Änderungen am Fahrzeuginnenraum selbst erforderlich sind, wird vorgeschlagen, daß sich die Ablage aus einem Grundkörper (3) und einer Unterlage (4) für die Büro- und Organisationsmittel zusammensetzt. Der Grundkörper (3) stützt sich mit seiner Unterseite auf der Sitzfläche (1) des Beifahrersitzes ab. Die Unterlage (4) ist in veränderbarer Position und vorzugsweise schwenkbar an dem Grundkörper (3) befestigt, wobei sich die Unterlage (4) in einer ersten Position in oder über dem Grundkörper (3) und in einer zweiten Position in Richtung auf den Fahrersitz versetzt neben dem Grundkörper (3) befindet.

## Beschreibung

Die Erfindung betrifft eine Ablage zur Befestigung im Innenraum eines Kraftfahrzeuges, insbesondere für Büro- und Organisationsmittel wie beispielsweise sog. "Laptops" und "Notebooks", die sich aus einem Grundkörper und einer Unterlage für die Büro- und Organisationsmittel zusammensetzt, wobei sich der Grundkörper mit seiner Unterseite auf der Sitzfläche des Beifahrersitzes des Kraftfahrzeuges abstützt.

Für Geschäftsleute und Mitarbeiter im Außendienst ist es oftmals unumgänglich, Büroarbeiten auch im Kraftfahrzeug zu erledigen. Zur Erleichterung sind bereits Ablagen bekannt, beispielsweise kofferähnliche Konstruktionen, die sich auf dem Beifahrersitz ablegen lassen und Platz für die wichtigsten Büro- und Organisationsmittel bieten. Bekannt ist es auch, solche Ablagen in der Weise zu gestalten, daß sich der Beifahrer-Sicherheitsgurt um die Ablage festziehen läßt, um so zu verhindern, daß die Ablage bei einem starken Bremsen nach vorne gegen das Armaturenbrett des Kraftfahrzeuges prallt. Nachteilig bei solchen Ablagen ist, daß sich der auf dem Fahrersitz sitzende Benutzer mit seinem Oberkörper stark in Richtung auf den Beifahrersitz drehen muß, um dort arbeiten zu können. Dies führt zu einer unbequemen und zu Verspannungen führenden Haltung.

Bekannt sind auch bereits Ablagen, die sich an dem Lenkrad befestigen lassen, etwa durch Einhängen. Hierbei ist jedoch der Abstand zu dem Benutzer zu gering, so daß auch in diesem Fall ein entspanntes Arbeiten nicht möglich ist. Nach Beendigung der Arbeiten muß außerdem die Ablage mit den darauf aufliegenden Büro- und Organisationsmitteln anderweitig im Fahrzeug untergebracht werden, was umständlich und zeitaufwendig ist, nicht zuletzt wegen der häufig vorhandenen Verkabelung, etwa bei der Benutzung tragbarer Taschencomputer, sog. "Laptops" bzw. "Notebooks".

Ferner sind für den häufigen Einsatz Ablagen bekannt, die an geeigneten Teilen des Armaturenbrettes befestigt werden. Hierzu sind jedoch zunächst konstruktive Vorbereitungen und Änderungen am vorhandenen Fahrzeuginnenraum erforderlich, etwa die dauerhafte Befestigung von Verankerungselementen am Armaturenträger oder der Mittelkonsole des Fahrzeuges. Derartige Einbauten können sich wertmindernd im Falle eines Wiederverkaufes des Fahrzeuges auswirken.

Eine Ablage mit den eingangs zusammengefaßten Merkmalen ist aus der deutschen Gebrauchsmusterschrift 91 13 078 bekannt. Diese Ablage besteht aus einer Grundplatte, die gleichzeitig als Ablage für einen Aktenkoffer oder Behälter dient, sowie einer zwischen der Unterseite und der Grundplatte und der Sitzfläche des Fahrzeugsitzes angeordneten und mit der Grundplatte verbundenen Ausgleichsunterlage. Die Ausgleichsunterlage dient dazu, einen Ausgleich für die oft schräg nach hinten abfallende Sitzfläche des Fahrzeugsitzes zu schaffen, um so die Grundplatte in eine nahezu horizontale Ausrichtung zu bringen. An der Grundplatte sind in deren Randbereich mehrere Fixierelemente angebracht, um die Aktentasche oder den Behälter auf dieser Grundplatte zu befestigen. Vorgesehen sind ferner Öffnungen zum Hindurchführen des Sicherheitsgurtes, um so die gesamte Vorrichtung an dem Fahrzeugsitz sicher zu befestigen. Nachteilig bei dieser Ablage ist die dort ausdrücklich vorgesehene Fixierung des Aktenkoffers bzw. sonstigen Gegenstandes an der Grundplatte. Dies zwingt einen auf dem Fahrersitz sitzenden Benutzer dazu, sich mit seinem Oberkörper stark in Richtung auf den Beifahrersitz zu drehen, um dort arbeiten zu können. Dies führt zu einer unbequemen und zu Verspannungen führenden Haltung.

Der Erfindung liegt die **Aufgabe** zugrunde, eine Ablage zur Befestigung im Innenraum eines Kraftfahrzeuges zu schaffen, die es ermöglicht, Büro- und Organisationsarbeiten vom Fahrersitz des Kraftfahrzeuges aus in bequemer, entspannter Haltung zu erledigen, ohne daß irgendwelche konstruktive Vorbereitungen oder Änderungen am Fahrzeuginnenraum selbst erforderlich sind.

Zur **Lösung** wird bei einer Ablage der eingangs genannten Art vorgeschlagen, daß die Unterlage in veränderbarer Position an dem Grundkörper befestigt ist, wobei sich die Unterlage in einer ersten Position in oder über dem Grundkörper und in einer zweiten Position in Richtung auf den Fahrersitz versetzt neben dem Grundkörper befindet.

Für eine unter ergonomischen Gesichtspunkten ideale Arbeitsposition hat es sich als vorteilhaft herausgestellt, wenn die Unterlage um eine vertikale Drehachse schwenkbar an dem Grundkörper befestigt ist. Die Verwendung einer vertikalen Drehachse erlaubt ein gegenüber dem Umriß des Grundkörpers weites Ausschwenken der Unterlage, so daß diese nahe bis an den Fahrersitz heranführbar ist. Hierzu ist vorzugsweise die Drehachse im Bereich der dem Fahrersitz nächstgelegenen Seite des Grundkörpers angeordnet.

Um ein ungewolltes Verschwenken der Unterlage zu verhindern, kann ein die Unterlage in ihrer Position relativ zu dem Grundkörper fixierendes Blockierelement vorgesehen sein. Das Blockierelement kann die Unterlage in seiner ausgeschwenkten Arbeitsstellung und/oder in seiner Grundstellung in oder über dem Grundkörper fixieren. Auch eine Fixierung in verschiedenen Schwenkwinkeln ist möglich, um so die nach den subjektiven Vorstellungen des Benutzers optimale Position einstellen zu können. Zur Optimierung kann ferner der Beifahrersitz vor- oder zurückgestellt werden.

Um den Grundkörper zugleich als Aufbewahrungsbehältnis verwenden zu können, kann dieser als nach oben offener Kasten oder Koffer ausgebildet sein, dessen Öffnung in der ersten Position der Unterlage durch diese abgedeckt ist.

Um ein Verrutschen des Grundkörpers während der Fahrt zu verhindern, kann der Grundkörper mittels des vorhandenen Beifahrer-Sicherheitsgurtes, vorzugsweise dessen Beckengurtes, auf der Sitzfläche festspannbar sein. Von Vorteil ist es, wenn an dem Grundkörper eine Aufnahme für den Beifahrer-Sicherheitsgurt ausgebildet ist, in die sich dieser von oben her einführen läßt. Dadurch entfällt das mühsame Einfädeln des Griffes des Sicherheitsgurtes.

Beim Arbeiten mit ausgeschwenkter bzw. seitlich des Grundkörpers befindlicher Unterlagen entstehen relativ hohe Kippmomente. Um diese abzufangen, kann der Grundkörper an seiner Rückseite mit einer steifen oder versteifbaren Lasche versehen sein, die zwischen Sitzfläche und Rückenlehne des Beifahrersitzes einklemmbar ist. Um der Ablage zusätzlichen Halt auf der Sitzfläche zu geben, kann die Lasche mit mindestens einem aufpumpbaren Luftkissen versehen sein, welches sich bei Luftzufuhr in vertikaler Richtung weitet.

Schließlich wird mit der Erfindung eine Halterung für ein Ladegerät oder ein Netzteil in dem Grundkörper vorgeschlagen, sowie eine Kabeldurchführung für ein Verbindungskabel zu dem vorhandenen Zigarettenanzünder des Kraftfahrzeuges.

Weitere Einzelheiten und Vorteile werden nachfolgend anhand der Zeichnung erläutert. Darin zeigen:
- Fig. 1: in einer Seitenansicht eine auf dem Beifahrersitz eines Kraftfahrzeuges aufliegende Ablage mit einem darauf abgesetzten Laptop,
- Fig. 2: die Ablage nach Fig. 1 in einer anderen Ausführungsform,
- Fig. 3: die Ablage gemäß einer gegenüber den Figuren 1 und 2 abgewandelten Ausführungsform in einer perspektivischen Darstellung und
- Fig. 4: in einer perspektivischen Darstellung die Ablage nach Fig. 3, jedoch in ausgeschwenktem Zustand der Unterlage mit dem darauf abgesetzten Laptop, d. h. in Arbeitsstellung.

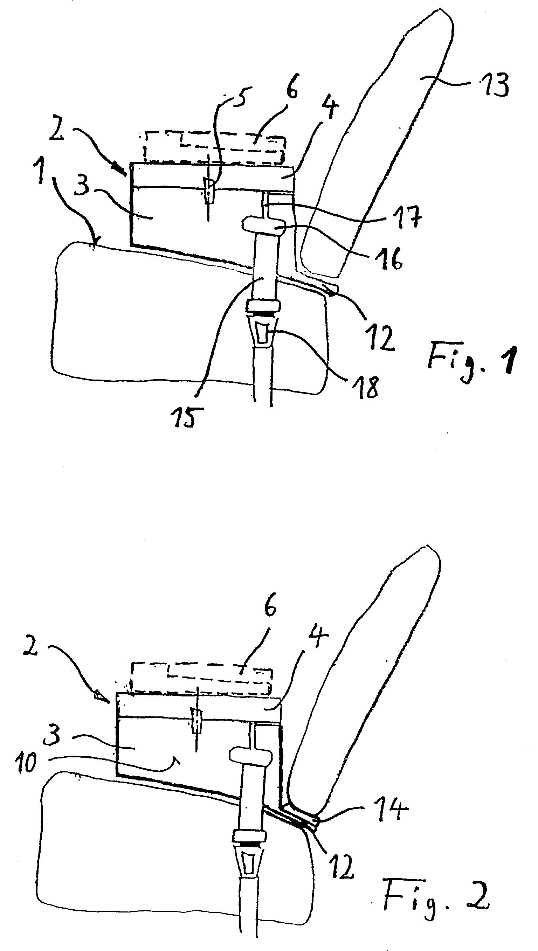

Die Figuren 1 und 2 zeigen den Beifahrersitz eines Kraftfahrzeuges, und zwar vom Fahrersitz aus gesehen. Auf der Sitzfläche 1 des Beifahrersitzes liegt unter ihrem Eigengewicht eine Ablage 2 auf. Diese setzt sich aus einem kastenförmigen Grundkörper 3 sowie einer Unterlage 4 oberhalb des Grundkörpers 3 zusammen. Die Unterlage 4 ist in veränderbarer Position an dem Grundkörper 3 befestigt, wozu beide Teile über eine vertikale Drehachse 5 miteinander verbunden sind.

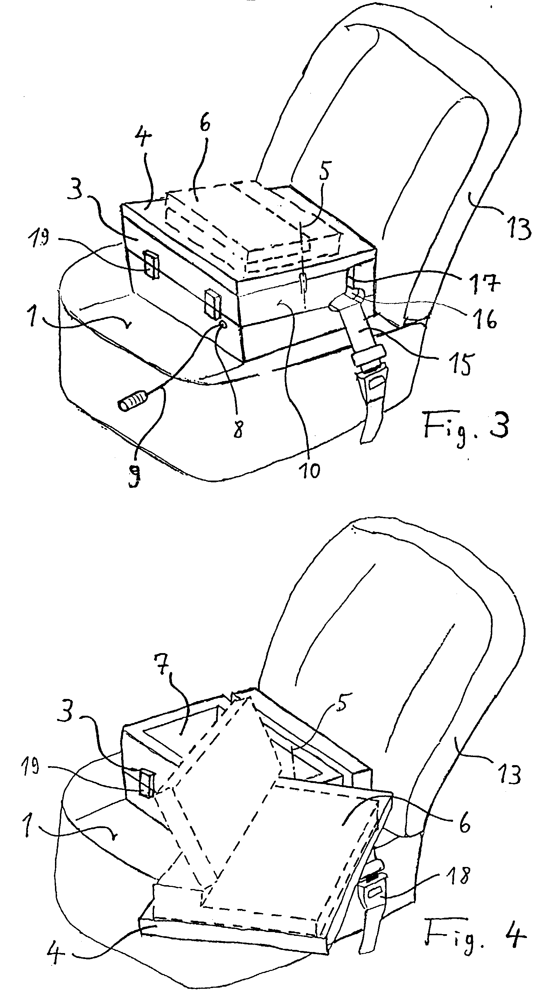

Wie die Figuren 3 und 4 erkennen lassen, befindet sich die Unterlage 4 in eingeschwenktem Zustand unmittelbar oberhalb des Grundkörpers 3, und deckt diesen ab. Auf der Unterlage 4 liegt beim Ausführungsbeispiel ein Taschencomputer 6, z. B. ein herkömmlicher "Laptop" bzw. ein "Notebook" auf.

Wird gemäß Fig. 4 die Unterlage 4 um die Drehachse 5 geschwenkt, so gelangt diese in eine zweite, auskragende Position, bei der sich die Unterlage 4 mit dem darauf aufliegenden Taschencomputer 6 in einer Stellung näher dem Fahrersitz und schräg zu diesem befindet. Der Fahrersitz ist in Fig. 4 nicht dargestellt; er befindet sich rechts von dem dargestellten Beifahrersitz. In der ausgeschwenkten Arbeitsstellung befindet sich die Unterlage 4 mit dem darauf aufliegenden Taschencomputer 6 schräg vor dem Fahrersitz, so daß dem auf dem Fahrersitz sitzenden Benutzer ein bequemes und entspanntes Arbeiten an dem Taschencomputer 6 möglich ist. In dieser zweiten Position liegt ferner die Oberseite des Grundkörpers 3 frei, so daß über eine dort vorgesehene Öffnung 7 das Innere des Grundkörpers 3 frei zugänglich ist. Dort kann verschiedenes Büro- und Organisationsmaterial angeordnet sein, ferner können dort Lagegeräte oder Netzgeräte für den Taschencomputer 6 untergebracht sein. In letzterem Fall kann, wie Fig. 3 erkennen läßt, in der Vorderseite des Grundkörpers 3 eine Kabeldurchführung 8 für ein Verbindungskabel 9 zu dem vorhandenen Zigarettenanzünder des Kraftfahrzeuges vorgesehen sein.

Damit sich die Unterlage 4 in der Arbeitsposition möglichst weit in Richtung auf den benachbarten Fahrersitz schwenken läßt, befindet sich die Drehachse 5 im Bereich der dem Fahrersitz zugewandten Seite 10 des Grundkörpers 3. Mittels eines Blockierelementes lassen sich Unterlage 4 und Grundkörper 3 zueinander verriegeln, und zwar in der ersten Grundposition und/oder der zweiten Arbeitsposition. Ferner kann vorgesehen sein, die Unterlage 4 in verschiedenen Winkelstellungen verriegelbar zu gestalten, um so dem Benutzer eine optimale Einstellung des besten Arbeitsabstandes zu ermöglichen. Das Blockierelement ist vorzugsweise in die Drehachse 5 integriert.

Infolge des Auskragens der Unterlage 4 mit dem Taschencomputer 6 in der zweiten Arbeitsposition wirken auf den Grundkörper 3 relativ große Kippmomente ein. Um diese abzufangen, ist der Grundkörper an seiner Rückseite mit einer Lasche 12 versehen, die den Grundkörper zwischen der Sitzfläche 1 und der Rückenlehne 13 des Beifahrersitzes einklemmt. Dies ist in den Figuren 1 und 2 dargestellt. Da der Abstand zwischen Sitzfläche 1 und Rückenlehne 13 nicht bei allen Kraftfahrzeugen derselbe ist, und um ferner die Klemmung und damit die Stabilität der Ablage zusätzlich zu erhöhen, kann an der Rückseite des Grundkörpers 3 ein Luftkissen 14 vorgesehen sein, welches sich mittels einer geeigneten Pumpe vergrößern läßt. Bei dem Ausführungsbeispiel nach Fig. 2 ist das Luftkissen 14 auf der Oberseite der im übrigen steifen Lasche 12 angeordnet, so daß beim Einlassen von Luft die dortigen Klemmkräfte verstärkt werden. Alternativ ist es auch möglich, das Luftkissen weiter hin anzuordnen, so daß bei dessen Aufpumpen der Grundkörper nach hinten in den Sitz hineingezogen wird und eine besonders gute Klemmung erfährt.

Zur zusätzlichen Sicherung der Ablage ist in diese der Beckengurt des Beifahrer-Sicherheitsgurtes 15 einlegbar. Hierzu ist in beiden Seitenwänden des Grundkörpers 3 eine Aussparung 16 vorgesehen, die nach oben, d. h. zur Oberseite des Grundkörpers 3 hin, zu einem Schlitz 17 verjüngt ist. Der Vorteil dieser Gestaltung liegt darin, daß sich der Beifahrer-Sicherheitsgurt 15 zunächst normal in das Schloß 18 einklinken läßt, und anschließend der Beckengurt von oben her durch den Schlitz 17 hindurch in die Aussparung 16 einfädelbar ist.

Bei den Ausführungsformen der Figuren 3 und 4 ist der Grundkörper 3 zweiteilig nach Art eines Koffers ausgebildet. Verschlüsse halten beide Schalen bei geschlossenem Koffer zusammen. In diesem Koffer lassen sich alle notwendigen Teile einschließlich des Taschencomputers 6 bei Nichtgebrauch einlegen.

### Bezugszeichenliste

- 1: Sitzfläche
- 2: Ablage
- 3: Grundkörper
- 4: Unterlage
- 5: Drehachse
- 6: Taschencomputer
- 7: Öffnung
- 8: Kabeldurchführung
- 9: Verbindungskabel
- 10: Seite des Grundkörpers
- 12: Lasche
- 13: Rückenlehne
- 14: Luftkissen
- 15: Beifahrer-Sicherheitsgurt
- 16: Aussparung für den Sicherheitsgurt
- 17: Schlitz
- 18: Schloß
- 19: Verschluß

## Patentansprüche

1. Ablage zur Befestigung im Innenraum eines Kraftfahrzeuges, insbesondere für Büro- und Organisationsmittel wie beispielsweise sog. "Laptops" und "Notebooks", die sich aus einem Grundköper (3) und einer Unterlage (4) für die Büro- und Organisationsmittel (6) zusammensetzt, wobei sich der Grundkörper (3) mit seiner Unterseite auf der Sitzfläche (1) des Beifahrersitzes des Kraftfahrzeuges abstützt,
**dadurch gekennzeichnet,**
daß die Unterlage (4) in veränderbarer Position an dem Grundkörper (3) befestigt ist, wobei sich die Unterlage (4) in einer ersten Position in oder über dem Grundkörper (3) und in einer zweiten Position in Richtung auf den Fahrersitz versetzt neben dem Grundkörper (3) befindet.

2. Ablage nach Anspruch 1, dadurch gekennzeichnet, daß die Unterlage (4) um eine vertikale Drehachse (5) schwenkbar an dem Grundkörper (3) befestigt ist.

3. Ablage nach Anspruch 2, dadurch gekennzeichnet, daß die Drehachse (5) im Bereich der dem Fahrersitz zugewandten Seite (10) des Grundkörpers (3) angeordnet ist.

4. Ablage nach Anspruch 2 oder Anspruch 3, gekennzeichnet durch ein die Unterlage (4) in ihrer Position relativ zu dem Grundkörper (3) fixierendes Blockierelement.

5. Ablage nach einem der vorangehenden Ansprüche, dadurch gekennzeichnet, daß der Grundkörper (3) ein nach oben offener Kasten ist, dessen Öffnung (7) in der ersten Position der Unterlage (4) durch diese abgedeckt ist.

6. Ablage nach einem der vorangehenden Ansprüche, dadurch gekennzeichnet, daß der Grundkörper (3) mittels des vorhandenen Beifahrer-Sicherheitsgurtes (15), vorzugsweise dessen Beckengurtes, auf der Sitzfläche (1) festspannbar ist.

7. Ablage nach Anspruch 6, gekennzeichnet durch eine an dem Grundkörper (3) ausgebildete Aufnahme für den Beifahrer-Sicherheitsgurt (15), in die dieser von oben her einführbar ist.

8. Ablage nach einem der vorangehenden Ansprüche, dadurch gekennzeichnet, daß der Grundkörper (3) an seiner Rückseite mit einer steifen oder versteifbaren Lasche (12) versehen ist, die zwischen Sitzfläche (1) und Rückenlehne (13) des Beifahrersitzes einklemmbar ist und die auf den Grundkörper (3) einwirkenden Kippmomente aufnimmt.

9. Ablage nach Anspruch 8, dadurch gekennzeichnet, daß die Lasche (12) mit mindestens einem aufpumpbaren Luftkissen (14) versehen ist, welches sich bei Luftzufuhr in vertikaler Richtung weitet.

10. Ablage nach einem der vorangehenden Ansprüche, gekennzeichnet durch eine Halterung für ein Ladegerät oder ein Netzteil in dem Grundkörper sowie eine Kabeldurchführung (8) für ein Verbindungskabel (9) zu dem vorhandenen Zigarettenanzünder des Kraftfahrzeuges.

11. Ablage nach einem der vorangehenden Ansprüche, dadurch gekennzeichnet, daß der Grundkörper (3) ein aus zwei Schalen bestehender Koffer ist.
